(19) Europäisches Patentamt / European Patent Office / Office européen des brevets

(11) **EP 3 251 331 B1**

(12) **FASCICULE DE BREVET EUROPEEN**

(45) Date de publication et mention
de la délivrance du brevet:
**18.05.2022 Bulletin 2022/20**

(21) Numéro de dépôt: **16701129.5**

(22) Date de dépôt: **20.01.2016**

(51) Classification Internationale des Brevets (IPC):
**H04N 1/405** (2006.01)    **H04N 1/52** (2006.01)
**H04N 1/44** (2006.01)     **B41M 3/00** (2006.01)
**B41M 3/14** (2006.01)

(52) Classification Coopérative des Brevets (CPC):
**H04N 1/405; B41M 3/008; B41M 3/14;
H04N 1/4453;** B41M 3/144; H04N 1/52

(86) Numéro de dépôt international:
**PCT/EP2016/051101**

(87) Numéro de publication internationale:
**WO 2016/120134 (04.08.2016 Gazette 2016/31)**

(54) **PROCÉDÉ D'IMPRESSION D'UNE IMAGE SUR UN DOCUMENT DE SÉCURITÉ, DOCUMENT DE SÉCURITÉ ET SUBSTRAT COMPRENANT UNE IMAGE IMPRIMÉE PAR UN TEL PROCÉDÉ**

VERFAHREN ZUM DRUCKEN EINES BILDES AUF EIN SICHERHEITSDOKUMENT, SICHERHEITSDOKUMENT UND SUBSTRAT MIT EINEM DURCH SOLCH EIN VERFAHREN GEDRUCKTEN BILD

METHOD OF PRINTING AN IMAGE ON A SECURITY DOCUMENT, SECURITY DOCUMENT AND SUBSTRATE COMPRISING AN IMAGE PRINTED BY SUCH A METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA MD**

(30) Priorité: **27.01.2015 FR 1550633**

(43) Date de publication de la demande:
**06.12.2017 Bulletin 2017/49**

(73) Titulaire: **BANQUE DE FRANCE
75001 Paris (FR)**

(72) Inventeurs:
• **CAPIEZ, Fabrice
63122 Ceyrat (FR)**
• **BLANC, Michel
63170 Aubiere (FR)**
• **VILCOT, Roger
63170 Perignat-les-Sarlieve (FR)**

(74) Mandataire: **Decorchemont, Audrey Véronique
Christèle et al
CABINET BOETTCHER
16, rue Médéric
75017 Paris (FR)**

(56) Documents cités:
**US-A1- 2003 021 437     US-A1- 2003 021 437
US-A1- 2006 201 362     US-A1- 2006 201 362
US-A1- 2008 259 400     US-A1- 2008 259 400
US-B2- 8 681 383**

• **Fays Elisabeth: "La trame dans les procédés
offset", , 15 January 2010 (2010-01-15), pages
1-15, XP055727409, Cours online Retrieved from
the Internet:
URL:https://web.archive.org/web/2014081002
5547/http://elisabeth.fays.pagesperso-oran
ge.fr/cours/Cours_PDF/Trame.pdf [retrieved on
2020-09-03]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

L'invention concerne un procédé d'impression d'une image finale à partir d'une image source sur un document de sécurité ou sur un substrat destiné à être rapporté sur un document de sécurité. L'invention se rapporte également à un document de sécurité comprenant une image finale imprimée à partir d'un tel procédé. L'invention se rapporte également à un substrat comprenant une image finale imprimée à partir d'un tel procédé et destiné à être rapporté sur un document de sécurité.

L'invention concerne plus particulièrement, bien que non exclusivement, l'impression d'une image finale sur un billet de banque ou sur un substrat subséquemment rapporté sur un billet de banque.

## ARRIERE-PLAN TECHNOLOGIQUE DE L'INVENTION

Dans le domaine des billets de banque, il est connu de réaliser des éléments de sécurité à partir d'encres sensiblement invisibles à la lumière visible mais visibles sous l'action d'autres longueurs d'ondes comme par exemple sous une lumière infrarouge ou encore une lumière ultraviolette. Ces éléments de sécurité s'avèrent ainsi plus difficiles à reproduire par d'éventuels contrefacteurs puisque de tels éléments ne sont pas observables et ne sont donc pas reproductibles par des moyens de reproduction courants tels que les photocopieurs du commerce.

Il est possible d'appliquer les techniques d'impression traditionnelles, connues pour les encres classiques, pour imprimer ces éléments de sécurité à partir d'encres sensiblement invisibles. Ceci a cependant pour inconvénient que la plupart des points d'encres de couleur différentes se retrouvent alors superposés, ce qui dégrade considérablement la saturation des couleurs obtenues et donc la qualité de l'image finale.

Pour pallier à ce défaut, il est connu une méthode consistant à juxtaposer les points d'encres sur le support pour éviter toute superposition néfaste au rendu colorimétrique. La taille des points d'encre est alors en outre modulée de façon à changer localement la densité apparente de chaque couleur primaire sur l'image finale et ainsi reconstituer la zone correspondante de l'image source. Les publications US 2008/259400 A1 et US 2006/201362 A1 divulguent des variantes de ce type de méthode.

Mais même selon cette deuxième méthode plus avantageuse, l'image finale obtenue présente plusieurs inconvénients.

Le premier inconvénient est celui d'une résolution relativement faible interdisant la reproduction de détails fins, de sorte que le contrôle d'authenticité du billet sur lequel est imprimée l'image finale soit difficile à effectuer. En effet, la juxtaposition des points implique une division de la résolution effective de l'image finale par autant de couleurs primaires utilisées. Par exemple, une trame de 150 lignes par pouce (soit environ 60 lignes par centimètre, linéature standard pour imprimer les images de magazines de bonne qualité) donnera une linéature effective de 50 lignes par pouce si l'on utilise trois couleurs juxtaposées (soit environ 20 lignes par centimètre, linéature inférieure même à celle utilisée pour imprimer sur du papier journal).

Un autre inconvénient est lié au phénomène physique dit de l'engraissement du point. Du fait des propriétés physiques de toute encre et du fait de la diffusion de la lumière dans le substrat d'impression, la taille apparente d'un point imprimé n'est pas la même que sa taille théorique calculée lors du tramage de l'image source. Cette différence de taille n'est pas constante mais varie en fonction du périmètre (c'est-à-dire de la taille) du point. Ainsi, la trame pour la mise en œuvre de la deuxième méthode (dont la taille des points varie et dont certains points de même couleur sont amenés à se toucher au-dessus d'un taux de couverture de 50%) subira des déformations colorimétriques importantes si l'image source n'est pas corrigée au moment du tramage. Cette correction, basée sur l'empirisme ou un procédé de gestion de la couleur compliqué est rendu d'autant plus difficile par le fait que les encres utilisées ne sont pas visibles à la lumière du jour et que les outils de mesure et de contrôle qualité standard n'y sont pas adaptés.

## OBJET DE L'INVENTION

Un but de l'invention est de proposer un procédé d'impression qui permette d'imprimer une image finale de bonne résolution et de couleur mieux maîtrisée sur un document de sécurité, ou sur un substrat ensuite rapporté sur un document de sécurité, alors même que ladite image est imprimée à partir d'encres sensiblement invisibles à la lumière du jour. Un but de l'invention est également de proposer un document de sécurité comportant une telle image finale. Un but de l'invention est en outre de proposer un substrat destiné à être rapporté sur un document de sécurité et comportant une telle image finale.

## BREVE DESCRIPTION DE L'INVENTION

En vue de la réalisation de ce but, l'invention définie dans les revendications indépendantes est proposée. Des modes de réalisations avantageux sont définis dans les revendications dépendantes. Ainsi, on propose un procédé d'impression d'une image finale sur un document de sécurité, ou sur un substrat destiné à être rapporté sur un document de sécurité, à partir d'une image source, l'image finale étant imprimée par juxtaposition de points d'encres de dimensions identiques sans superposition desdits points, au moins deux encres sensiblement invisibles à la lumière visible étant utilisées pour l'impression de l'image finale, le procédé comprenant les étapes de :

- définir au cours d'une première étape un ordre de juxtaposition des points d'encres dans des cellules de l'image finale ainsi qu'une orientation desdits points d'encres dans lesdites cellules, les cellules ayant des dimensions identiques de sorte que chaque cellule puisse comprendre un point de chacune des encres utilisées, les différents points étant juxtaposés,

- calculer un nombre desdites cellules imprimables dans l'image finale,
- redimensionner en conséquence l'image source pour obtenir une image source redimensionnée dont le nombre de pixels correspond au nombre de cellules dans l'image finale calculé à l'étape précédente,
- effectuer un tramage stochastique par seuillage sur l'image source redimensionnée pour obtenir une image source tramée, et
- à l'aide de l'image tramée, générer un fichier exploitable par des moyens d'impression en dessinant, pour chaque cellule individuelle du fichier exploitable, des points de chacune des encres utilisées, en accord avec leur présence ou leur absence d'après l'image source tramée, et selon l'ordre de juxtaposition et l'orientation définis lors de la première étape.

Ainsi, quand bien même chaque cellule de l'image finale est dimensionnée pour recevoir une juxtaposition de points de chaque encre utilisée par les moyens d'impression, le procédé selon l'invention permet de déterminer, pour chacune desdites cellules, si un point de la première encre est effectivement imprimé ou non et quelle est sa position au sein de la cellule (position relative par rapport aux autres points et orientation). Il en est de même pour la deuxième encre ainsi que pour les autres encres éventuelles... Les points des différentes encres utilisées sont ainsi de tailles identiques mais ont une fréquence qui varie d'une zone à l'autre de l'image finale puisqu'ils ne sont pas nécessairement présents dans toutes les cellules.

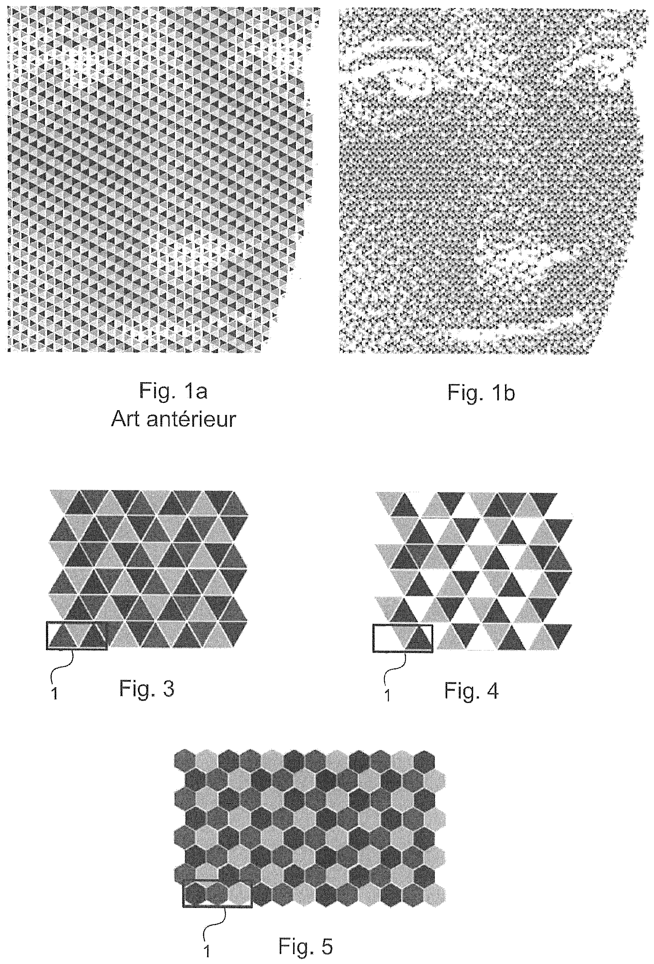

Le procédé selon l'invention permet donc de déterminer la position optimale des points d'encres à imprimer (position relative par rapport aux autres points et orientation) afin que la combinaison des radiations des points adjacents de l'image finale reconstitue une zone correspondante de l'image source. Il s'avère que ceci permet d'obtenir une image finale ayant une bonne résolution car la taille de chaque point peut ainsi être proche de la taille minimum reproductible par le système d'impression considéré. Ainsi, les figures 1a et 1b représentent une même image finale respectivement imprimée avec un procédé de l'art antérieur, c'est à dire un procédé dans lequel les points ont des dimensions différentes au sein d'une même image, et avec le procédé selon l'invention. Dans la figure la, les points ont tous une forme triangulaire dont le diamètre varie entre 20 et 255 micromètres tandis que dans la figure 1b, les points ont tous une forme triangulaire d'une taille unique de 100 micromètres. Les deux figures 1a et 1b illustrent clairement que la figure 1b présente une image bien plus nette, possédant notamment plus de détails, que la figure la.

Le procédé selon l'invention permet donc d'obtenir une image finale ayant une bonne résolution. Ceci facilite le contrôle d'authenticité du document de sécurité sur lequel une telle image est imprimée.

De façon avantageuse, la juxtaposition des points d'encre permet d'avoir un effet additif de la lumière émise par les différents points d'encres lors de leur excitation ce qui permet d'avoir une image finale de bonne intensité lumineuse. Ceci facilite encore davantage le contrôle d'authenticité du document de sécurité.

Par ailleurs, l'image finale imprimée grâce au procédé selon l'invention s'avère plus résistante aux variations de production et notamment aux erreurs de repérage entre les couleurs dues aux moyens d'impression utilisés comparativement à une image imprimée selon des procédés de l'art antérieur. De la sorte, même avec une erreur de repérage, l'image finale imprimée avec le procédé selon l'invention conservera une bonne netteté. Ceci est avantageux car le contrôle du repérage manuel autant qu'automatisé est rendu très difficile par l'utilisation d'encres sensiblement invisibles requérant des conditions d'observation particulières. Une tolérance plus forte aux erreurs de repérage constitue un gain en terme de productivité et en terme de taux de fautés.

De plus, le procédé selon l'invention permet une plus grande stabilité des couleurs utilisées que les procédés traditionnels puisque les points d'encres ont tous les mêmes dimensions et puisque chaque point d'une encre donnée est isolé et ne touche jamais un point voisin de même couleur, quel que soit le taux de couverture considéré. Les différents points d'encres d'une couleur donnée réagissent ainsi tous de la même façon au phénomène "d'engraissement du point" ce qui permet de mettre éventuellement en place une étape de compensation de ce phénomène relativement simple. Le procédé selon l'invention facilite donc l'impression de l'image finale.

Par "lumière visible", ou "lumière du jour", on entend bien entendu l'ensemble des ondes électromagnétique qui sont visibles pour l'œil humain (ce qui correspond sensiblement à une gamme de longueurs d'ondes allant de 380 à 800 nanomètres).

Par "sensiblement invisible", on entend toute encre qui est destinée à être invisible à la lumière visible et à être visible sous une excitation d'une autre longueur d'onde pour limiter sa détection mais qui, aussi discrète soit elle, peut s'avérer être légèrement visible sous la lumière du jour généralement de par une brillance légèrement différente du reste du document de sécurité. Cette brillance est cependant un effet indésirable de l'encre.

De même, par "cellule" ou encore "pixel" on entend l'entité géométrique qui découpe fictivement une image mais qui n'est pas imprimée.

Pour la présente demande, le "diamètre" d'un point d'encre est à entendre selon sa définition générale mathématique c'est-à-dire que ce terme "diamètre" fait référence à la plus grande distance séparant deux entités de ce point d'encre. Ainsi, lorsqu'il est question ici d'un diamètre d'un point d'encre cela ne signifie pas que ledit point d'encre soit nécessairement circulaire.

En vue de la réalisation de ce but, on propose également un document de sécurité comportant une image imprimée avec le procédé selon l'invention tel que précédemment décrit.

Toujours en vue de la réalisation de ce but, on propose en outre un substrat destiné à être rapporté sur un document de sécurité et comportant une image imprimée avec le procédé selon l'invention tel que précédemment décrit.

BREVE DESCRIPTION DES DESSINS

Les figures 1a et 1b ont déjà été décrites précédemment.

Par ailleurs, l'invention sera mieux comprise à la lumière de la description qui suit d'un mode de mise en œuvre particulier non limitatif de l'invention. Il sera fait référence aux figures ci-jointes, parmi lesquelles :

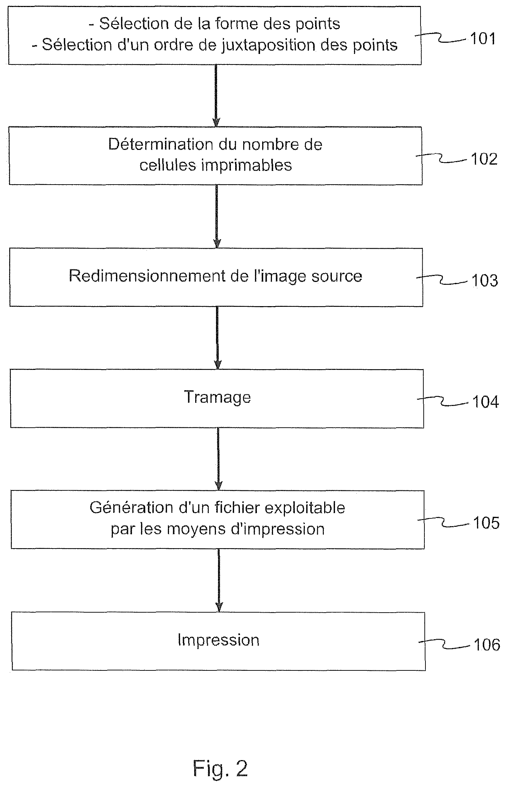

- la figure 2 est un schéma représentant les principales étapes du procédé selon l'invention,
- les figures 3 et 4 sont des vues très agrandies de parties d'une image finale imprimée par le procédé symbolisé à la figure 2, la figure 3 correspondant à une partie de l'image finale apparaissant de couleur blanche et la figure 4 correspondant à une partie de l'image finale à dominance jaune,
- la figure 5 est une vue très agrandie d'une partie d'une image finale imprimée par le procédé symbolisé à la figure 2, mais avec une autre forme de points que pour les figures 3 et 4, la figure 5 correspondant à une partie de l'image finale apparaissant de couleur blanche.

DESCRIPTION DETAILLEE DE L'INVENTION

En référence aux différentes figures, le procédé d'impression selon l'invention vise ici à imprimer une image finale sur un billet de banque à partir d'une image source, l'image finale étant imprimée par juxtaposition de points d'encres de dimensions identiques. L'image source est par exemple une photographie ou toute autre image se présentant sous forme numérique.

De préférence, l'image finale est imprimée à partir de trois encres sensiblement invisibles à la lumière du jour. Les trois encres sont toutes ici des encres fluorescentes ; c'est-à-dire des encres qui sont excitées par la lumière ultraviolette invisible et qui émettent en retour une lumière de couleur visible. Par exemple, les trois encres sont choisies de sorte que la première encre émette une couleur rouge, que la deuxième encre émette une couleur verte et que la troisième encre émette une couleur bleue lorsque lesdites encres sont soumises à une excitation ultraviolette.

De façon préférée, on choisit ces trois encres de façon à ce que la chromaticité, mesurée sur une zone de l'image finale correspondant à une zone blanche dans l'image source et donc à une couverture maximale et équivalente des trois encres, soit égale à la chromaticité du point blanc défini dans un profil d'écran standard comme le "sRGB" (pour Standard Red Green Blue en anglais soit l'espace standard de couleur rouge vert bleu qui est défini par la norme CIE 61966-2-1, CIE étant l'acronyme pour Commission Internationale de l'Éclairage). On rappelle que dans le diagramme de chromaticité normalisé par la CIE, les coordonnées du point blanc de l'espace de couleurs "sRGB" sont :

$$x = 0.3127 \; ; \; y = 0.3291.$$

Ceci permet d'avoir une plus grande stabilité des couleurs utilisées. De la sorte, l'image finale visible sous excitation ne nécessite au plus que d'infimes corrections pour compenser le phénomène "d'engraissement du point" et ainsi pour se rapprocher des couleurs de l'image source lorsqu'elle est observée sur un écran calibré et profilé au standard "sRGB".

Le procédé selon l'invention comporte une étape initiale 101.

Selon un mode de mise en œuvre particulier, au cours de ladite étape initiale 101, on sélectionne la forme des points d'encres qui vont être imprimés sur le billet de banque. On définit ici une forme de point d'encre et un agencement en cellules desdits points pour obtenir un pavage complet du plan.

De préférence, on choisit des points d'encres en forme de triangle. En effet, la forme triangulaire permet une meilleure imbrication des points d'encres tout en conservant un pavage parfait du plan. On peut ainsi obtenir une image de meilleure résolution. De façon privilégiée, les points d'encres sont en forme de triangle équilatéral. De la sorte, les points d'encres sont imbriqués de façon optimale, un triangle équilatéral pointant dans une direction étant imbriqué entre deux triangles équilatéraux pointant dans la direction opposée de sorte que lesdits trois triangles forment une cellule de forme trapézoïdale.

Les points d'encres une fois imprimés ont ici un diamètre de 100 micromètres et sont espacés entre eux de 10 micromètres.

La forme et la taille des points définissent dès lors les cellules de l'image finale. En effet, les cellules sont dimensionnées de sorte que chaque cellule puisse comprendre un point de chacune des encres utilisées, les différents points étant juxtaposés. Les cellules d'une même image ont donc des dimensions identiques qui sont fixes et non modifiables. Une telle cellule 1 est ici référencée sur les figures 3 et 4 et comporte ainsi deux points triangulaires, adjacents et pointant vers le haut, de deux encres différentes et un point triangulaire pointant vers le bas d'encre de la troisième couleur et encadré par les deux autres points d'encres. Grâce à leur forme trapézoïdale, les cellules elles-mêmes s'imbriquent aussi les unes dans les autres.

Au cours de cette étape initiale 101, on détermine également l'ordre de juxtaposition des points d'encres au sein des cellules de l'image finale. Cet ordre de juxtaposition est de préférence déterminé afin que la disposition des encres dans l'image finale limite le plus possible les artefacts visuels dans ladite image finale. Typiquement, les points d'une même encre ne sont pas disposés selon une structure laissant apparaître des lignes horizontales, verticales ou diagonales sur l'image finale. De façon particulière, l'ordre de juxtaposition demeure le même pour des cellules d'une même ligne de cellules mais est permuté d'une ligne de cellules à une autre. De la sorte, chacune des trois encres est affectée de façon périodique sur une même ligne et un changement d'ordre desdites encres est effectué à chaque changement de ligne. Cette permutation judicieuse de l'ordre de juxtaposition des encres à chaque nouvelle ligne permet d'éviter les artefacts visuels indésirables tels que des structures de lignes parcourant l'image finale. De préférence, on sélectionne seulement deux ordres de juxtaposition des points d'encres au sein d'une même cellule pour toute l'image finale, chaque ligne comportant un ordre de juxtaposition différent de celui des deux lignes l'encadrant. En se référant à la figure 3, la première ligne de cellules de l'image comporte un premier ordre de juxtaposition (première encre, deuxième encre, troisième encre), la deuxième ligne de cellules comporte un deuxième ordre de juxtaposition (deuxième encre, troisième encre, première encre), la troisième ligne comporte de nouveau le premier ordre de juxtaposition, la quatrième ligne comporte de nouveau le deuxième ordre de juxtaposition...

Parallèlement, au cours de cette étape initiale 101, on détermine également l'orientation des points d'encres au sein des cellules de l'image finale. De façon particulière, l'orientation des points est ici affectée de façon périodique sur une même ligne et un changement de cette périodicité est effectué à chaque changement de ligne. En référence à la figure 3, la première ligne de cellules de l'image comporte un premier ordre d'orientation (triangle pointant vers le haut puis triangle pointant vers le bas), la deuxième ligne comporte un deuxième ordre d'orientation (triangle pointant vers le bas puis triangle pointant vers le haut), la troisième ligne comporte de nouveau le premier ordre d'orientation, la quatrième ligne comporte de nouveau le deuxième ordre d'orientation ...

Cette permutation judicieuse de l'ordre d'orientation des points à chaque nouvelle ligne permet encore davantage d'éviter les artefacts visuels indésirables. Ceci permet aussi d'obtenir un pavage du plan aussi complet que possible et même, lorsque la forme des points le permet ce qui est ici le cas avec la forme triangulaire, un pavage total du plan.

Du fait, de l'orientation différente des points d'une ligne à une autre, l'orientation des cellules varie également en conséquence d'une ligne à une autre.

En outre, du fait de l'alternance des points sur une même ligne, l'orientation de deux cellules successives sur une même ligne est également différente.

Cette permutation judicieuse de l'ordre d'orientation des cellules à chaque nouvelle ligne et au sein d'une même ligne permet encore davantage d'éviter les artefacts visuels indésirables.

Une fois cette étape initiale 101 achevée, on calcule au cours d'une deuxième étape 102 le nombre de cellules imprimables dans l'image finale sachant que la taille des cellules a été fixée lors de l'étape initiale 101 et que l'on connaît la taille souhaitée de l'image finale. Plus précisément, on calcule le nombre de cellules imprimables aussi bien selon une première direction de l'image qu'une deuxième direction de l'image perpendiculaire à la première.

Au cours d'une troisième étape 103, au vu du nombre de cellules imprimables dans l'image finale selon la première direction et selon la deuxième direction, on redimensionne en conséquence l'image source pour obtenir une image source redimensionnée. Cette étape 103 est mise en œuvre par un rééchantillonnage de l'image source à une taille en pixels correspondant aux nombres de cellules selon la première direction et selon la deuxième direction calculées lors de la deuxième étape 102. Du fait d'un rapport hauteur sur largeur différent de 1 pour les cellules considérées, l'image ainsi redimensionnée présente elle aussi un rapport hauteur sur largeur différent de celui de l'image source.

Au cours d'une quatrième étape 104, on effectue un tramage stochastique par seuillage de l'image source redimensionnée pour obtenir une image source tramée.

Plus précisément, pour chaque couche de couleur rouge, verte, bleue de l'image source redimensionnée (puisque l'image finale sera imprimée à partir d'encres de couleurs rouge, bleue et verte) un tramage est effectué indépendamment afin de réduire les nombreux niveaux d'intensité de la couleur correspondante, à savoir 256 niveaux ou plus, à seulement deux niveaux. Les deux niveaux sont de type tout ou rien c'est-à-dire intensité nulle de la couleur (signifiant une absence de couleur) et intensité non nulle de la couleur (signifiant une présence de la couleur). Ainsi, chaque pixel de l'image source tramée se retrouve défini par un triplet de valeurs binaires :

- une première valeur binaire qui est à 0 pour signifier une absence de couleur rouge ou à 255 pour signifier une présence de la couleur rouge, et
- une deuxième valeur binaire qui est à 0 pour signifier une absence de couleur verte ou à 255 pour signifier une présence de la couleur verte,
- une troisième valeur binaire qui est à 0 pour signifier une absence de couleur bleue ou à 255 pour signifier une présence de la couleur bleue.

Ainsi, l'image source tramée est ici encodée dans un fichier informatique de type RVB (Rouge Vert Bleu) n'ayant que 8 valeurs de couleurs possibles :

- (0, 0, 0);
- (255, 255, 255);
- (255, 0, 0);
- (255, 0, 255);
- (255, 255, 0);
- (0, 0, 255);
- (0, 255, 255); et
- (0, 255, 0).

En variante, l'image source tramée est définie par trois fichiers informatiques séparés monochromes (comprenant uniquement des valeurs binaires valant 0 ou 1) et décrivant chacun une couche de couleur rouge, verte ou bleue séparée à la place du fichier unique précité.

Le seuillage générant le tramage est réalisé soit avec une valeur de seuil unique et une diffusion de l'erreur aux pixels voisins, soit avec une matrice de seuils différents régissant le seuillage de plusieurs pixels (le tramage est alors dit ordonné). De façon encore plus privilégiée, le tramage est mis en œuvre à l'aide de l'algorithme de Jarvis-Judice-Ninke.

Au cours d'une cinquième étape 105, on génère un fichier exploitable par des moyens d'impression en dessinant pour chaque cellule du fichier exploitable la forme appropriée des points de chacune des encres utilisées lorsque leur présence est dictée par l'image source tramée obtenue à l'étape 104. A cet effet, les différentes cellules de l'image source tramée sont parcourues une à une. Pour une valeur binaire à 0 dans la cellule, aucun point d'encre ne doit être imprimé sur le billet de banque de sorte que l'information correspondante est indiquée dans le fichier exploitable. Pour une valeur binaire à 255 dans la cellule, un point d'encre de la couleur correspondante, et selon la forme et la taille définie à l'étape initiale 101, doit être imprimé de sorte que l'information correspondante est indiquée dans le fichier exploitable.

Le fichier exploitable est par exemple un fichier vectoriel ou encore un fichier bitmap à la résolution des moyens d'impression considérés. Le fichier exploitable est par exemple composite ou bien encore constitué de plusieurs sous-fichiers séparés.

Lors d'une sixième étape 106, l'image est alors imprimée sur le billet de banque à l'aide du fichier exploitable.

De la sorte, le procédé selon l'invention permet de modifier la fréquence d'impression des points d'encres des différentes encres disponibles pour l'impression de l'image finale en commandant l'impression effective ou non des points d'encres dans chacune des cellules, et en s'assurant qu'aucun point ne se superpose.

En référence à la figure 3, une partie blanche de l'image finale se compose ainsi de cellules comprenant tous les points d'encres juxtaposés à savoir un point d'encre verte, un point d'encre rouge et un point d'encre bleue. En référence à la figure 4, une partie jaune de l'image finale se compose elle majoritairement de cellules comprenant seulement deux points d'encres juxtaposés, c'est-à-dire un point d'encre verte et un point d'encre bleue, et donc en outre une zone non imprimée correspondant à l'emplacement prévu au point d'encre rouge.

Bien entendu l'invention n'est pas limitée au mode de mise en œuvre décrit et on peut y apporter des variantes de réalisation sans sortir du cadre de l'invention tel que défini par les revendications.

En particulier, bien qu'ici le procédé d'impression selon l'invention ait été mis en œuvre pour l'impression d'une image finale sur un billet de banque, le procédé selon l'invention pourra être mis en œuvre pour l'impression d'une image finale sur tout autre type de document de sécurité comme par exemple un passeport, une carte d'identité, un titre officiel ... En variante, le procédé selon l'invention pourra être mis en œuvre pour l'impression d'une image finale sur un substrat qui sera ensuite rapporté (par exemple par collage ou par transfert) sur un document de sécurité (tel qu'un billet de banque, un passeport, une carte d'identité, un titre officiel ...). Le substrat est par exemple un film plastique adhésif ou encore une couche polymère transférable. Bien qu'ici l'image finale soit imprimée à partir de trois encres, ladite image pourra être imprimée à partir d'un nombre différent d'encres et même avec deux encres seulement, comme il est par exemple décrit dans la demande de brevet de la demanderesse EP 1 985 458. Par ailleurs, en place des encres décrites émettant des couleurs primaires Rouge, Verte, Bleue des encres émettant d'autres couleurs pourront être employées. On pourra également employer d'autres encres que les encres fluorescentes comme par exemple des encres anti-Stokes, c'est à dire des encre réémettant à une longueur d'onde inférieure à la longueur d'onde d'excitation (par exemple, émettant une lumière visible lorsqu'elles sont éclairées par une lumière infrarouge). Dans tous les cas, les encres utilisées seront bien entendu de couleurs différentes et sensiblement invisibles à la lumière du jour.

Par ailleurs, les points pourront avoir une autre forme que triangulaire. La figure 5 illustre ainsi un mode de mise en œuvre particulier dans lequel les points d'encres ont une forme hexagonale, une cellule de l'image étant également symbolisée et référencée 1 sur la figure 5. En variante, les points pourront avoir une forme rectangulaire ou toute autre forme permettant un pavage complet de l'image finale. Dans le cas où la forme des points ne serait pas paramétrable par les moyens d'impression choisis mettant en œuvre le procédé selon l'invention, un point d'encre pourra être formé par plusieurs gouttes d'une même encre. Par exemple un point d'encre rectangulaire pourra être obtenu par approximation à l'aide de plusieurs gouttes d'encre sensiblement circulaires. Ceci entraînera toutefois une saturation et une intensité plus faibles de la couleur obtenue du fait du pavage non complet du plan par les formes de points approximées (des zones du substrat ou du document de sécurité ne recevant pas d'encre et étant donc « perdues » au regard du potentiel d'intensité lumineuse). En tout état de cause, les points d'encres eux-mêmes sont uniquement juxtaposés dans la présente demande et aucunement superposés. La seule tolérance est ici la superposition éventuelle de gouttes d'une même encre pour former un point d'encre d'une forme particulière.

De même, les points d'encre pourront avoir une taille différente de ce qui a été décrit à condition que les points d'une même image aient la même taille. Les points d'encres auront typiquement un diamètre compris entre 10 et 150 micromètres, bornes incluses. De préférence, les points d'encres auront un diamètre compris entre 50 et 110 micromètres, bornes incluses. On préférera avoir un diamètre de points le plus petit possible tout en restant imprimable qualitativement parlant pour les moyens d'impression utilisés pour la mise en œuvre du procédé selon l'invention. Les points seront donc de préférence choisis pour être proches de la taille minimale reproductible par le procédé d'impression considéré.

L'étape initiale pourra être différente de ce qui a été dit. Par exemple, l'étape initiale pourra également comprendre une sélection des dimensions des points d'encres (étant entendu que pour une même image les dimensions de tous les points d'encres sont identiques). L'étape initiale pourra ne pas comporter de sélection de la forme des points. L'étape initiale pourra comporter une sélection de l'orientation générale de l'ensemble des cellules de sorte qu'une direction générale de plus forte résolution des cellules coïncide avec la direction de l'image source ayant le plus de détails. Pour les exemples illustrés par les figures 3, 4 et 5, les cellules ont une forme globale de rectangle : la direction de plus forte résolution de ces cellules coïncide dans ce cas avec la largeur de ces rectangles. La figure 1b présente ainsi une image pour laquelle l'orientation des points, et donc des cellules, se fait selon une direction verticale. Les cellules pourront avoir une autre forme globale que rectangulaire comme par exemple carrée. On préférera toutefois avoir des cellules en forme globale de rectangle pour conserver une image finale de meilleure résolution, même si celle-ci est différente d'une direction à l'autre.

Bien qu'ici l'étape de tramage soit mise en œuvre par un algorithme de Jarvis-Judice-Ninke, ladite étape pourra être mise en œuvre par d'autres algorithmes de diffusion d'erreurs tels que Floyd-Steinberg. En variante, d'autres types d'algorithmes pourront être utilisés comme les algorithmes de tramage ordonné de type algorithme Bayer, etc.

Bien qu'ici les coordonnées colorimétriques du point blanc choisi pour cible correspondent aux coordonnées du point blanc définies dans le profil normalisé sRGB, il est possible de choisir comme référence lors de la formulation des encres, tout point blanc décrit dans un profil d'écran ou espace colorimétrique RVB standard associé à l'image source (par exemple : l'espace « Adobe RGB » ou l'espace « ProPhoto RGB »). Ceci permettra dans tous les cas d'avoir une plus grande stabilité des couleurs utilisées. De la sorte, l'image finale visible sous excitation ne nécessitera au plus que d'infimes corrections pour compenser le phénomène "d'engraissement du point" et ainsi pour se rapprocher des couleurs de l'image source lorsqu'elle est observée sur un écran calibré et profilé standard. En pratique, on sélectionnera le plus souvent comme point blanc, en fonction du profil choisi, l'un ou l'autre des illuminants standardisés les plus courants : D65 (point blanc défini par les coordonnées x = 0.3127, y = 0.3291 dans le diagramme de chromaticité normalisé par la CIE utilisé dans le profil sRBG) et D50 (point blanc ayant comme coordonnées x =0.3457, y = 0.3585 dans le diagramme de chromaticité normalisé par la CIE utilisé par exemple dans le profil ProPhoto RGB).

## Revendications

1. Procédé d'impression d'une image finale sur un document de sécurité, ou un substrat destiné à être rapporté sur un document de sécurité, à partir d'une image source, l'image finale étant imprimée par juxtaposition de points d'encres de dimensions identiques sans superposition desdits points, au moins deux encres sensiblement invisibles à la lumière du jour étant utilisées pour l'impression de l'image finale, le procédé comprenant les étapes de :

- définir au cours d'une première étape (101) un ordre de juxtaposition des points d'encres dans des cellules de l'image finale ainsi qu'une orientation desdits points d'encres dans lesdites cellules, les cellules ayant des dimensions identiques de sorte que chaque cellule puisse comprendre un point de chacune des encres utilisées, les différents points étant juxtaposés, la taille des cellules étant ainsi fixée au cours de cette première étape,
- calculer (102) un nombre desdites cellules imprimables dans l'image finale,
- redimensionner (103) en conséquence l'image source pour obtenir une image source redimensionnée dont le nombre de pixels correspond au nombre de cellules dans l'image finale calculé à l'étape précédente,
- effectuer (104) un tramage stochastique par seuillage sur l'image source redimensionnée pour obtenir une image source tramée, et
- à l'aide de l'image tramée, générer (105) un fichier exploitable par des moyens d'impression en dessinant, pour chaque cellule individuelle du fichier exploitable, des points de chacune des encres utilisées, en accord avec leur présence ou leur absence d'après l'image source tramée, et selon l'ordre de juxtaposition et l'orientation définis lors de la première étape (101), et
- imprimer, sur le document de sécurité ou sur le substrat destiné à être rapporté sur le document de sécurité, l'image finale à l'aide du fichier exploitable, les points des différentes encres utilisées étant ainsi de tailles identiques mais ayant une fréquence variant d'une zone à l'autre de l'image finale puisque lesdits points ne sont pas nécessairement présents dans toutes les cellules.

2. Procédé d'impression selon la revendication 1, dans lequel au cours de la première étape (101) on sélectionne également une forme de points d'encres pour l'impression de l'image finale.

3. Procédé d'impression selon la revendication 2, dans lequel on choisit des points d'encres en forme de triangle.

4. Procédé d'impression selon l'une des revendications précédentes, dans lequel au cours de la première étape (101) on sélectionne également une taille de points d'encres pour l'impression de l'image finale.

5. Procédé d'impression selon l'une des revendications précédentes, dans lequel au cours de la première étape (101) on sélectionne l'ordre de juxtaposition des points d'encres dans les cellules de sorte que, d'une ligne de cellules à une autre, on permute l'ordre de juxtaposition des points d'encres à l'intérieur des cellules.

6. Procédé d'impression selon l'une des revendications précédentes, dans lequel au cours de la première étape (101) on sélectionne l'ordre d'orientation des points d'encres dans les cellules de sorte que, d'une ligne à une autre, on permute l'ordre d'orientation des points d'encres à l'intérieur des cellules.

7. Procédé d'impression selon l'une des revendications précédentes, dans lequel au cours de la première étape (101) on définit une orientation générale des cellules de sorte qu'une direction de plus forte résolution des cellules coïncide avec une direction de l'image source ayant le plus de détails.

8. Procédé d'impression selon l'une des revendications précédentes, dans lequel les encres utilisées sont des encres fluorescentes.

9. Procédé d'impression selon l'une des revendications 1 à 7, dans lequel les encres utilisées sont des encres anti-Stokes.

10. Procédé d'impression selon l'une des revendications précédentes, dans lequel les points d'encres ont un diamètre compris entre 10 et 150 micromètres.

11. Procédé d'impression selon l'une des revendications précédentes, dans lequel les points d'encres ont un diamètre compris entre 50 et 110 micromètres.

12. Procédé d'impression selon l'une des revendications précédentes, dans lequel on utilise trois encres pour l'impression de l'image finale, une encre émettant une couleur verte, une encre émettant une couleur rouge et une encre émettant une couleur bleue lorsqu'elles sont excitées par une lumière autre que la lumière visible.

13. Procédé d'impression selon la revendication 12, dans lequel on choisit lesdites trois encres de sorte que lorsqu'elles sont juxtaposées en proportions égales, lesdites encres présentent une chromaticité résultante proche du point blanc défini dans un profil colorimétrique rouge-vert-bleu standard adapté à représenter l'image source.

14. Procédé d'impression selon la revendication 12, dans lequel on choisit lesdites trois encres de sorte que lorsqu'elles sont juxtaposées en proportions égales, lesdites encres présentent une chromaticité résultante proche du point blanc défini par les coordonnées $x = 0.3127$, $y = 0.3291$ dans le diagramme de chromaticité normalisé par la Commission Internationale de l'Éclairage.

15. Procédé d'impression selon la revendication 12, dans lequel on choisit lesdites trois encres de sorte que lorsqu'elles sont juxtaposées en proportions égales, lesdites encres présentent une chromaticité résultante proche du point blanc défini par les coordonnées $x = 0.3457$, $y = 0.3585$ dans le diagramme de chromaticité normalisé par la Commission Internationale de l'Éclairage.

16. Document de sécurité comportant une image imprimée selon le procédé d'impression défini selon l'une quelconque des revendications 1 à 15.

17. Substrat destiné à être rapporté sur un document de sécurité, comportant une image imprimée selon le procédé d'impression défini selon l'une quelconque des revendications 1 à 15.

**Patentansprüche**

1. Verfahren zum Drucken eines endgültigen Bildes auf ein Sicherheitsdokument oder ein Substrat, das dazu bestimmt ist, auf ein Sicherheitsdokument aufgebracht zu werden, ausgehend von einem Quellbild, wobei das endgültige Bild durch Aneinanderreihung von Druckfarbenpunkten mit identischen Abmessungen ohne Überlagerung der genannten Punkte gedruckt wird, wobei mindestens zwei bei Tageslicht im Wesentlichen unsichtbare Druckfarben zum Drucken des endgültigen Bildes verwendet werden, wobei das Verfahren die Schritte umfasst:

- Definieren, während eines ersten Schrittes (101), einer Reihenfolge der Aneinanderreihung der Druckfarbenpunkte in Zellen des endgültigen Bildes sowie einer Ausrichtung der genannten Druckfarbenpunkte in den genannten Zellen, wobei die Zellen identische Abmessungen haben, derart, dass jede Zelle einen Punkt jeder der verwendeten Druckfarben umfassen kann, wobei die verschiedenen Punkte aneinandergereiht sind, wobei die Größe der Zellen somit während dieses ersten Schrittes festgelegt wird,
- Berechnen (102) einer Anzahl der genannten in dem endgültigen Bild druckbaren Zellen,
- entsprechendes Anpassen der Größe (103) des Quellbildes, um ein größenangepasstes Quellbild zu erhalten, dessen Pixelanzahl der im vorherigen Schritt berechneten Anzahl von Zellen in dem endgültigen Bild entspricht,
- Durchführen (104) einer stochastischen Rasterung durch Schwellenwertbildung an dem größenangepassten Quellbild, um ein gerastertes Quellbild zu erhalten und
- mit Hilfe des gerasterten Bildes, Erzeugen (105) einer Datei, die durch Druckmittel verwertbar ist, indem für jede einzelne Zelle der verwertbaren Datei Punkte jeder der verwendeten Druckfarben in Übereinstimmung mit ihrem Vorhandensein oder ihrem Nichtvorhandensein nach dem gerasterten Quellbild und entsprechend der Reihenfolge der Aneinanderreihung und der Ausrichtung, die während des ersten Schrittes (101) definiert wurden, gezeichnet werden, und
- Drucken des endgültigen Bildes mit Hilfe der verwertbaren Datei auf das Sicherheitsdokument oder auf das Substrat, das dazu bestimmt ist, auf das Sicherheitsdokument aufgebracht zu werden, wobei die Punkte der verschiedenen verwendeten Druckfarben somit identische Größen haben, aber eine Häufigkeit, die von einer Zone zur anderen des endgültigen Bildes variiert, da die genannten Punkte nicht notwendigerweise in allen Zellen vorhanden sind.

2. Druckverfahren nach Anspruch 1, bei dem man während des ersten Schrittes (101) auch eine Form von Druckfarbenpunkten für den Druck des endgültigen Bildes auswählt.

3. Druckverfahren nach Anspruch 2, bei dem man Druckfarbenpunkte in Form eines Dreiecks auswählt.

4. Druckverfahren nach einem der vorhergehenden Ansprüche, bei dem man während des ersten Schrittes (101) auch eine Größe der Druckfarbenpunkte für den Druck des endgültigen Bildes auswählt.

5. Druckverfahren nach einem der vorhergehenden Ansprüche, bei dem man während des ersten Schrittes (101) die Reihenfolge der Aneinanderreihung der Druckfarbenpunkte in den Zellen auswählt, derart, dass man von einer Zellenzeile zur anderen die Reihenfolge der Aneinanderreihung der Druckfarbenpunkte im Inneren der Zellen umstellt.

6. Druckverfahren nach einem der vorhergehenden Ansprüche, bei dem man während des ersten Schrittes (101) die Ausrichtungsreihenfolge der Druckfarbenpunkte in den Zellen derart auswählt, dass man von einer Zeile zur anderen die Ausrichtungsreihenfolge der Druckfarbenpunkte im Inneren der Zellen umstellt.

7. Druckverfahren nach einem der vorhergehenden Ansprüche, bei dem man während des ersten Schrittes (101) eine allgemeine Ausrichtung der Zellen derart definiert, dass eine Richtung höherer Auflösung der Zellen mit einer Richtung des Quellbildes mit den meisten Details zusammenfällt.

8. Druckverfahren nach einem der vorhergehenden Ansprüche, bei dem die verwendeten Druckfarben fluoreszierende Druckfarben sind.

9. Druckverfahren nach einem der Ansprüche 1 bis 7, bei dem die verwendeten Druckfarben Anti-Stokes-Druckfarben sind.

10. Druckverfahren nach einem der vorhergehenden Ansprüche, bei dem die Druckfarbenpunkte einen Durchmesser zwischen 10 und 150 Mikrometer haben.

11. Druckverfahren nach einem der vorhergehenden Ansprüche, bei dem die Druckfarbenpunkte einen Durchmesser zwischen 50 und 110 Mikrometer haben.

12. Druckverfahren nach einem der vorhergehenden Ansprüche, bei dem man drei Druckfarben für den Druck des endgültigen Bildes verwendet, wobei eine Druckfarbe eine grüne Farbe emittiert, eine Druckfarbe eine rote Farbe emittiert und eine Druckfarbe eine blaue Farbe emittiert, wenn sie durch ein anderes Licht als sichtbares Licht angeregt werden.

**13.** Druckverfahren nach Anspruch 12, bei dem man die genannten drei Druckfarben derart auswählt, dass, wenn sie in gleichen Anteilen aneinandergereiht sind, die genannten Druckfarben eine resultierende Chromatizität aufweisen, die nahe dem Weißpunkt ist, der in einem Standard-Rot-Grün-Blau-Farbprofil definiert ist, das geeignet ist, das Quellbild darzustellen.

**14.** Druckverfahren nach Anspruch 12, bei dem man die genannten drei Druckfarben derart auswählt, dass, wenn sie in gleichen Anteilen aneinandergereiht sind, die genannten Druckfarben eine resultierende Chromatizität aufweisen, die nahe dem Weißpunkt ist, der durch die Koordinaten x = 0,3127, y= 0,3291 in dem Farbwertdiagramm definiert ist, das durch die Internationale Beleuchtungskommission normiert ist.

**15.** Druckverfahren nach Anspruch 12, bei dem man die genannten drei Druckfarben derart wählt, dass, wenn sie in gleichen Anteilen aneinandergereiht sind, die genannten Druckfarben eine resultierende Chromatizität aufweisen, die nahe dem Weißpunkt ist, der durch die Koordinaten x = 0,3457, y = 0,3585 in dem Farbwertdiagramm definiert ist, das von der Internationalen Beleuchtungskommission normiert ist.

**16.** Sicherheitsdokument, umfassend ein Bild, das gemäß dem Druckverfahren gedruckt ist, das nach einem der Ansprüche 1 bis 15 definiert ist.

**17.** Substrat, das dazu bestimmt ist, auf ein Sicherheitsdokument aufgebracht zu werden, umfassend ein Bild, das gemäß dem Druckverfahren gedruckt ist, das nach einem der Ansprüche 1 bis 15 definiert ist.

**Claims**

**1.** A printing method for printing a final image on a security document or on a substrate for applying to a security document, the final image being taken from a source image, and being printed by juxtaposing ink dots of identical dimensions without said dots overlapping, with at least two inks that are substantially invisible in daylight being used for printing the final image, the method comprising the steps of:

• during a first step (101) defining both a juxtaposition order for juxtaposing ink dots in cells of the final image and also an orientation for said ink dots in said cells, the cells being of dimensions that are identical in such a manner that each cell can include one dot of each of the inks used, the various dots being juxtaposed, with the size of the cells thus being determined during this first step;
• calculating (102) a number for said cells that are printable in the final image;
• correspondingly redimensioning (103) the source image to obtain a redimensioned source image in which the number of pixels corresponds to the number of cells in the final image as calculated in the preceding step;
• performing stochastic screening (104) by thresholding on the redimensioned source image in order to obtain a screened source image;
• using the screened image to generate (105) a usable file that is suitable for use by printer means, the file being generated by defining, for each individual cell of the printable file, dots for each of the inks being used, in compliance with their presence or the absence in the screened source image, and in the juxtaposition order and the orientation as defined during the first step (101); and
• using the usable file to print the final image on the security document or on the substrate for applying to the security document, the dots of the various inks used thus being of identical size but having a frequency that varies from one zone to another of the final image since said dots are not necessarily present in all of the cells.

**2.** A printing method according to claim 1, wherein during the first step (101) a shape is also selected for the ink dots for printing the final image.

**3.** A printing method according to claim 2, wherein ink dots are selected that are triangular in shape.

**4.** A printing method according to any preceding claim, wherein during the first step (101) a size is also selected for the ink dots for printing the final image.

**5.** A printing method according to any preceding claim, wherein during the first step (101) the juxtaposition order of the ink dots in the cells is selected so that the juxtaposition order of the ink dots within the cells is permuted from one row of cells to another.

**6.** A printing method according to any preceding claim, wherein during the first step (101) the orientation of the ink dots in the cells is selected so that the orientation order of the ink dots within the cells is permuted from one row to another.

**7.** A printing method according to any preceding claim, wherein during the first step (101) a general orientation for the cells is defined so that a general direction of greatest cell resolution coincides with the direction of the source image that has the most details.

**8.** A printing method according to any preceding claim, wherein the inks used are fluorescent inks.

9.  A printing method according to any one of claims 1 to 7, wherein the inks used anti-Stokes inks.

10. A printing method according to any preceding claim, wherein the ink dots have a diameter in the range 10 $\mu$m to 150 $\mu$m.

11. A printing method according to any preceding claim, wherein the ink dots have a diameter in the range 50 $\mu$m to 110 $\mu$m.

12. A printing method according to any preceding claim, wherein three inks are used: one ink emitting a green color, one ink emitting a red color, and one ink emitting a blue color when the inks are excited by light other than visible light.

13. A printing method according to claim 12, wherein said three inks are selected in such a manner that they are juxtaposed in equal proportions, said inks presenting resultant chromaticity that is close to the white point defined in a standard red green blue colorimetric profile adapted to represent the source image.

14. A printing method according to claim 12, wherein said three inks are selected in such a manner that when they are juxtaposed in equal proportions, said inks present a resulting chromaticity close to the white point defined by the coordinates x = 0.3127, y = 0.3291 in the chromaticity diagram as standardized by the International Commission on Illumination.

15. A printing method according to claim 12, wherein said three inks are selected in such a manner that when they are juxtaposed in equal proportions, said inks present a resulting chromaticity close to the white point defined by the coordinates x = 0.3457, y = 0.3585 in the chromaticity diagram as standardized by the International Commission on Illumination.

16. A security document including an image printed by the printing method defined in any one according to any one of claims 1 to 15.

17. A substrate for applying to a security document and including an image printed by the printing method defined in any one according to any one of claims 1 to 15.

Fig. 1a
Art antérieur

Fig. 1b

Fig. 3

1

Fig. 4

1

Fig. 5

1

```
┌─────────────────────────────────────────────┐
│      - Sélection de la forme des points       │ ⤳─101
│ - Sélection d'un ordre de juxtaposition des points │
└─────────────────────────────────────────────┘
                      │
                      ▼
┌─────────────────────────────────────────────┐
│        Détermination du nombre de             │ ⤳─102
│           cellules imprimables                │
└─────────────────────────────────────────────┘
                      │
                      ▼
┌─────────────────────────────────────────────┐
│     Redimensionnement de l'image source       │ ⤳─103
└─────────────────────────────────────────────┘
                      │
                      ▼
┌─────────────────────────────────────────────┐
│                  Tramage                       │ ⤳─104
└─────────────────────────────────────────────┘
                      │
                      ▼
┌─────────────────────────────────────────────┐
│      Génération d'un fichier exploitable       │ ⤳─105
│         par les moyens d'impression           │
└─────────────────────────────────────────────┘
                      │
                      ▼
┌─────────────────────────────────────────────┐
│                 Impression                     │ ⤳─106
└─────────────────────────────────────────────┘
```

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008259400 A1
- US 2006201362 A1
- EP 1985458 A